# EUROPEAN PATENT APPLICATION

(11) **EP 4 683 279 A1**
(43) Date of publication of application: **21.01.2026**
(21) Application number: 24809985.5
(22) Date of filing: 23.02.2024
(51) Int. Cl.: H04L 27/26

(54) **DATA TRANSMISSION METHOD AND APPARATUS, AND STORAGE MEDIUM**

(30) Priority: 25.05.2023 CN 202310601867
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/078428
(87) International publication number: WO 2024/239736

(57) **Abstract**

Provided are a data transmission method and apparatus, and a storage medium. The data transmission method comprises: dividing data to be transmitted into N groups of first sequences, the N groups of first sequences corresponding to different sub-bands, there being M groups of first sequences amongst the N groups of first sequences, and the number of data of the M groups of first sequences being greater than the number of subcarriers of the corresponding sub-bands, where N is a positive integer, and M is a positive integer less than or equal to N; obtaining N groups of third sequences on the basis of the N groups of first sequences, M groups of third sequences amongst the N groups of third sequences being obtained by respectively performing Fourier transform and removal operations on the M groups of first sequences, and the number of data of the N groups of third sequences being equal to the number of subcarriers of the corresponding sub-bands; obtaining a group of data sequences on the basis of the N groups of third sequences; and transmitting the group of data sequences on time-frequency resources corresponding to the data to be transmitted.

## Description

The present disclosure claims priority to Chinese Patent Application No. 202310601867.1, filed on May 25, 2023, the entire content of which is incorporated herein by reference.

### TECHNICAL FIELD

The present disclosure relates to the field of communication technologies, and in particular, to a data transmission method, an apparatus, and storage medium.

### BACKGROUND

Orthogonal frequency division multiplexing (Orthogonal Frequency Division Multiplexing, OFDM) is an efficient digital modulation technique frequently used in wireless communication systems. Currently, OFDM technology has been relatively widely applied in wireless communications. Furthermore, due to the adoption of a cyclic prefix (Cyclic Prefix, CP), a CP-OFDM system can effectively solve a multipath delay problem. However, the performance of the CP-OFDM system is relatively sensitive to frequency offset and timing offset between adjacent subbands, and the spectrum leakage of the system is large, which may easily cause inter-subband interference.

### SUMMARY

In an aspect, a data transmission method is provided. The data transmission method includes:
dividing to-be-transmitted data into N groups of first sequences; the N groups of first sequences correspond to different subbands, there are M groups of first sequences among the N groups of first sequences, a number of pieces of data of the M groups of first sequences is greater than a number of subcarriers of corresponding subbands, N is a positive integer, and M is a positive integer less than or equal to N;
obtaining N groups of third sequences based on the N groups of first sequences; where M groups of third sequences among the N groups of third sequences are obtained by performing Fourier transform and removal operations on the M groups of first sequences respectively; a number of pieces of data of the N groups of third sequences equals to a number of subcarriers of corresponding subbands;
obtaining a group of data sequences based on the N groups of third sequences; and
transmitting the group of data sequences on a time-frequency resource corresponding to the to-be-transmitted data.

In another aspect, a data transmission apparatus is provided, where the data transmission apparatus includes:
a processing module, configured to: divide to-be-transmitted data into N groups of first sequences; the N groups of first sequences correspond to different subbands, there are M groups of first sequences among the N groups of first sequences, a number of pieces of data of the M groups of first sequences is greater than a number of subcarriers of corresponding subbands, N is a positive integer, and M is a positive integer less than or equal to N;
the processing module is further configured to: obtain N groups of third sequences based on the N groups of first sequences; where M groups of third sequences among the N groups of third sequences are obtained by performing Fourier transform and removal operations on the M groups of first sequences respectively; a number of pieces of data of the N groups of third sequences equals to a number of subcarriers of corresponding subbands;
the processing module is further configured to: obtain a group of data sequences based on the N groups of third sequences; and
a communication module, configured to: transmit the group of data sequences on a time-frequency resource corresponding to the to-be-transmitted data.

In yet another aspect, a communication apparatus is provided. The communication apparatus includes: a memory and a processor; the memory and the processor are coupled; the memory is configured to store computer program instructions executable by the processor; the processor, upon executing the computer program instructions, implements the data transmission method according to any one of the aspects described above.

In yet another aspect, a computer-readable storage medium is provided. The computer-readable storage medium stores computer program instructions, where the computer program instructions, upon being executed by a computer (e.g., a communication apparatus or a signal transmission apparatus), implement the data transmission method according to any one of the aspects described above.

In yet another aspect, a computer program product is provided. The computer program product includes computer program instructions, where the computer program instructions, upon being executed, implement the data transmission method according to any one of the aspects described above.

### BRIEF DESCRIPTION OF THE DRAWINGS

FIG. 1 is a schematic diagram of an architecture of a communication system according to some embodiments.
FIG. 2 is a flowchart of a data transmission method according to some embodiments.
FIG. 3 is a schematic diagram of a process of data transmission according to some embodiments.
FIG. 4 is a schematic diagram of a process of another data transmission according to some embodiments.
FIG. 5 is a schematic diagram of a process of yet another data transmission according to some embodiments.
FIG. 6 is a schematic diagram of a process of yet another data transmission according to some embodiments.
FIG. 7 is a schematic diagram of a process of yet another data transmission according to some embodiments.
FIG. 8 is a schematic diagram of a process of yet another data transmission according to some embodiments.
FIG. 9 is a schematic diagram of a process of yet another data transmission according to some embodiments.
FIG. 10 is a schematic diagram of a process of yet another data transmission according to some embodiments.
FIG. 11 is a schematic diagram of a process of yet another data transmission according to some embodiments.
FIG. 12 is a schematic structural diagram of a data transmission apparatus according to some embodiments.
FIG. 13 is a schematic structural diagram of a communication apparatus according to some embodiments.

### DETAILED DESCRIPTION

To enable those skilled in the art to better understand the technical solutions of the embodiments of the present disclosure, the technical solutions in the embodiments of the present disclosure will be described clearly and completely below with reference to the accompanying drawings in the embodiments of the present disclosure. Obviously, the described embodiments are merely some rather than all of the embodiments of the present disclosure. Based on the embodiments in the present disclosure, all other embodiments obtained by ordinary technicians in this field without creative work belong to the scope of protection of the present disclosure.

In the description of the present disclosure, unless otherwise specified, "/" means "or"; for example, A/B may mean A or B. "And/or" herein is merely an association relationship describing associated objects, indicating that three relationships may exist; for example, A and/or B may mean: A alone, B alone, and both A and B. In addition, "at least one" means one or more, and "a plurality of/the plurality of/multiple" means two or more. Wordings such as "first" and "second" do not limit the quantity and execution sequence, and wordings such as "first" and "second" also do not necessarily indicate a difference.

It should be noted that in the present disclosure, terms such as "exemplarily" or "for example" are used to present examples, illustrations, or explanations. Any embodiment or design solution described as "exemplarily" or "for example" in the present disclosure shall not be construed as being preferred or advantageous over other embodiments or design solutions. Rather, the usage of terms such as "exemplarily" or "for example" is intended to present related concepts in a specific manner.

Long Term Evolution (Long Term Evolution, LTE) technology is a wireless cellular communication technology for 4G (4^{th} Generation Mobile Communication Technology). LTE adopts orthogonal frequency division multiplexing (OFDM) technology, and time-frequency resources composed of subcarriers and OFDM symbols constitute the wireless physical time-frequency resources of the LTE system. Currently, OFDM technology has been widely used in wireless communications. Due to the usage of a cyclic prefix, a CP-OFDM system can effectively solve the multipath delay problem and convert a frequencyselective channel into a set of parallel flat channels, which greatly simplifies channel estimation methods and achieves higher channel estimation accuracy. However, the performance of the CP-OFDM system is relatively sensitive to frequency offset and timing offset between adjacent subbands, which is primarily due to the significant spectral leakage of the system, thereby easily leading to inter-subband interference. Currently, the LTE system uses guard intervals in frequency domain, but this reduces spectral efficiency; therefore, some new technologies are needed to suppress out-of-band leakage.

Fifth Generation New Radio (Fifth Generation New Radio, 5G NR) communication technology still uses CP-OFDM as the basic waveform, and adjacent subbands may use different subcarrier spacing numerologies (basic parameter sets), which will destroy the orthogonality between subcarriers and therefore bring a new interference problem. To address this interference problem, one relatively direct method is to insert a guard bandwidth between two transmission bands with different numerologies, but this wastes frequency resources.

With technological advancements, the frequency bands used for the future sixthgeneration communication network service will span a wide range, and deployment manners will also increase. In this way, not only multi-bandwidth channels are required, but also waveform schemes that satisfy different scenarios are required. Independently applying each waveform scheme will increase the cost of base station(s)/terminal(s). How to design a unified waveform architecture to flexibly integrate multiple waveforms, and how to flexibly support applications with different channel bandwidths, flexibly configure different subbands to adapt to different channel conditions, and therefore improve spectral efficiency are problems that need to be solved.

In view of this, the present disclosure provides a data transmission method, including: dividing to-be-transmitted data into N groups of first sequences; the N groups of first sequences correspond to different subbands, there are M groups of first sequences among the N groups of first sequences, a number of pieces of data of the M groups of first sequences is greater than a number of subcarriers of corresponding subbands, N is a positive integer, and M is a positive integer less than or equal to N; obtaining N groups of third sequences based on the N groups of first sequences; where numbers of data in the N groups of third sequences equals to numbers of subcarriers of the corresponding subbands; obtaining a group of data sequences based on the N groups of third sequences; transmitting the group of data sequences on a time-frequency resource corresponding to the to-be-transmitted data. Thus, by adopting super-Nyquist transmission in subbands corresponding to the M groups of first sequences, a guard interval is reduced while facilitating the reduction of out-of-band leakage in the subbands and improving spectral efficiency. Additionally, multi-bandwidth channels and multiple waveforms may be supported flexibly.

The technical solution provided in the embodiments of the present disclosure may be applied to various mobile communication networks, for example, a New Radio (New Radio, NR) mobile communication network using fifth-generation mobile communication technology (5^{th} Generation Mobile Communication Technology, 5G), a future mobile communication network, or a system integrating multiple communication technologies, which is not limited in the embodiments of the present disclosure.

In the embodiments of the present disclosure, the network architecture of a mobile communication network (including but not limited to 3G, 4G, 5G, and a future mobile communication network) may include a first communication node and a second communication node. In some examples, the first communication node may be a base station, and the second communication node may be a terminal. In some other examples, the first communication node may be a terminal, and the second communication node may be a base station. In yet other examples, in a device-to-device communication scenario, both the first communication node and the second communication node may be terminals. The embodiments of the present disclosure are not limited thereto.

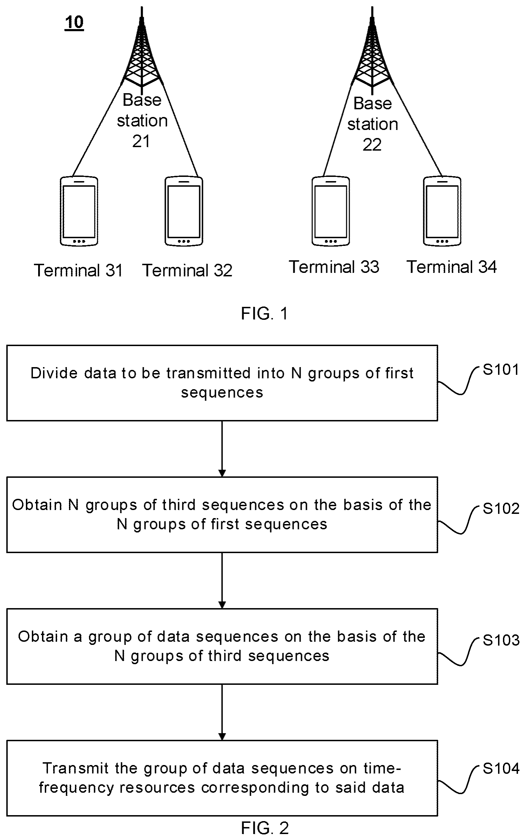

Exemplarily, taking the first communication node being a base station and the second communication node being a terminal as an example, FIG. 1 shows a schematic diagram of an architecture of a communication system according to the embodiments of the present disclosure. As shown in FIG. 1, a communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be communicatively connected.

Exemplarily, taking a network-side device being a base station and a receivingside device as a terminal as an example, FIG. 1 shows a schematic diagram of an architecture of a communication system according to an embodiment of the present disclosure. As shown in FIG. 1, a communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be communicatively connected.

In some embodiments, a base station is configured to provide wireless access services for the plurality of terminals. A base station provides at least one service coverage area (also referred to as a cell). A terminal entering the area may communicate with the base station via a wireless signal, thereby receiving the wireless access service provided by the base station. Service coverage areas of the base station 21 may overlap, and a terminal located in an overlapping area may receive wireless signals from multiple base stations.

In some embodiments, a base station may connect to multiple terminal devices; for example, the base station 21 is connected to the terminal 31 and the terminal 32. The terminal 31 and the terminal 32 may be located in a same cell, or the terminal 31 and the terminal 32 may be located in different cells. That is, a base station may provide network services to terminals in a cell, or may simultaneously provide network services to terminals in multiple cells.

In some embodiments, a base station may be an evolved base station (evolutional node B, eNB or eNodeB) or a base station in LTE, Long Term Evolution Advanced (Long Term Evolution Advanced, LTEA), a base station in a 5G network, or a base station in a future communication system, and the base station may include various macro base stations, micro base stations, home base stations, remote radio devices, reconfigurable intelligent surfaces (Reconfigurable Intelligent Surface, RIS), routers, wireless fidelity (Wireless Fidelity, WIFI) devices, or various network-side devices such as a primary cell (Primary Cell, PCell) and a secondary cell (Secondary Cell, SCell).

In some embodiments, a terminal may be a device with wireless transceiver capabilities, which may be deployed on land, including indoor or outdoor, handheld, wearable, or vehicle-mounted; may also be deployed on water (such as ships, etc.); and may also be deployed in the air (for example, on airplanes, balloons, satellites, etc.). A terminal may be a mobile phone (Mobile Phone), a tablet (Pad), a computer with wireless transceiving functions, a virtual reality (Virtual Reality, VR) terminal, an augmented reality (Augmented Reality, AR) terminal, a wireless terminal in industrial control (Industrial Control), a wireless terminal in self driving (Self Driving), a wireless terminal in remote medical (Remote Medical), a wireless terminal in smart grid (Smart Grid), a wireless terminal in transportation safety (Transportation Safety), a wireless terminal in smart city (Smart City), a wireless terminal in smart home (Smart Home), and so on. The embodiments of the present disclosure do not limit the application scenarios. A terminal may sometimes be called a user, a user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, which is not limited in the embodiments of the present disclosure.

It should be noted that FIG. 1 is merely an exemplary framework diagram; the number of devices included in FIG. 1 and the names of respective devices are not limited, and besides the devices shown in FIG. 1, the communication system may further include other devices, such as a core network device.

The application scenarios of the embodiments of the present disclosure are not limited. The system architecture and service scenarios described in the embodiments of the present disclosure are intended to more clearly illustrate the technical solutions of the embodiments of the present disclosure and do not constitute a limitation to the technical solutions provided by the embodiments of the present disclosure. Those of ordinary skill in the art may understand that as the network architecture evolves and new service scenarios emerge, the technical solutions provided by the embodiments of the present disclosure are equally applicable to similar technical problems.

The embodiments of the present disclosure provide a data transmission method, applicable to a first communication node. As shown in FIG. 2, the method includes the following steps S101-S104.

In S101: to-be-transmitted data is divided into N groups of first sequences.

The N groups of first sequences correspond to different subbands; there are M groups of first sequences among the N groups of first sequences, and a number of pieces of data in the M groups of first sequences is greater than a number of subcarriers of the corresponding subband; N is a positive integer; M is a positive integer less than or equal to N.

In some embodiments, the to-be-transmitted data is all or a part of the to-be-transmitted data in a channel bandwidth.

In some embodiments, respective groups of the first sequences of the N groups of first sequences are assigned different subbands, and a total of N subbands are assigned; that is, the N groups of first sequences correspond to N subbands. The N subbands include all or a part of the frequency-domain resource blocks in a channel bandwidth, and each of the N subbands corresponds to a first sequence.

In some embodiments, a number of pieces of data in the N groups of first sequences is greater than a number of subcarriers of the corresponding subbands. In this case, the above M equals to N.

In some embodiments, numbers of pieces of data in the N groups of first sequences are the same. Alternatively, the numbers of data in the N groups of first sequences are not all the same.

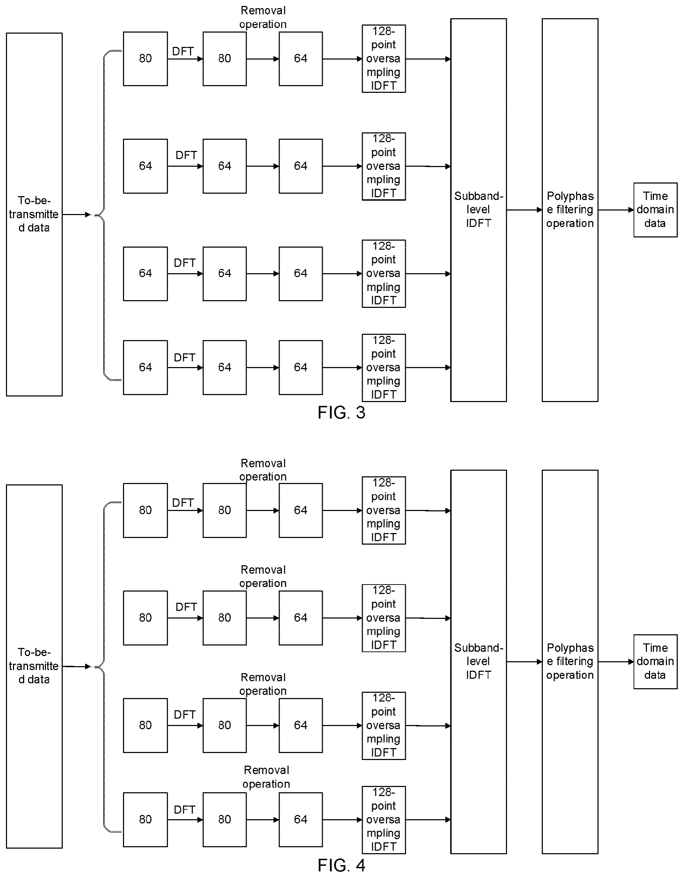

Exemplarily, as shown in FIG. 3, the to-be-transmitted data is divided into four groups of first sequences; the first group of first sequences includes 80 pieces of data; each of the second, third, and fourth groups of first sequences includes 64 pieces of data.

As another example, as shown in FIG. 4, the to-be-transmitted data is divided into four groups of first sequences; each group of first sequences includes 80 pieces of data. A number of subcarriers of the subband corresponding to each group of the first sequences in the four groups of first sequences is 64; that is, numbers of pieces of data in each of the four groups of first sequences is greater than a number of subcarriers of the corresponding subband.

In some embodiments, numbers of pieces of data in the M groups of first sequences are the same. Alternatively, the numbers of pieces of data in the M groups of first sequences are not all the same. In this way, a number of pieces of data within a subband may be flexibly configured.

Exemplarily, continuing to refer to FIG. 4, numbers of pieces of data of respective groups of the first sequences in the four groups of first sequences are greater than the numbers of subcarriers of corresponding subbands thereof, and the numbers of pieces of data of the four groups of first sequences are the same.

In some embodiments, the to-be-transmitted data includes constellation-point-modulated data and R reference signal data, where R is a positive integer. The constellation-point-modulated data is used to transmit user data, while the reference signal data is used to help a receiving end measure a channel state, and perform channel estimation, and decoding. By using the reference signal data, the receiving end may demodulate and decode signals more accurately, thereby improving communication reliability and performance.

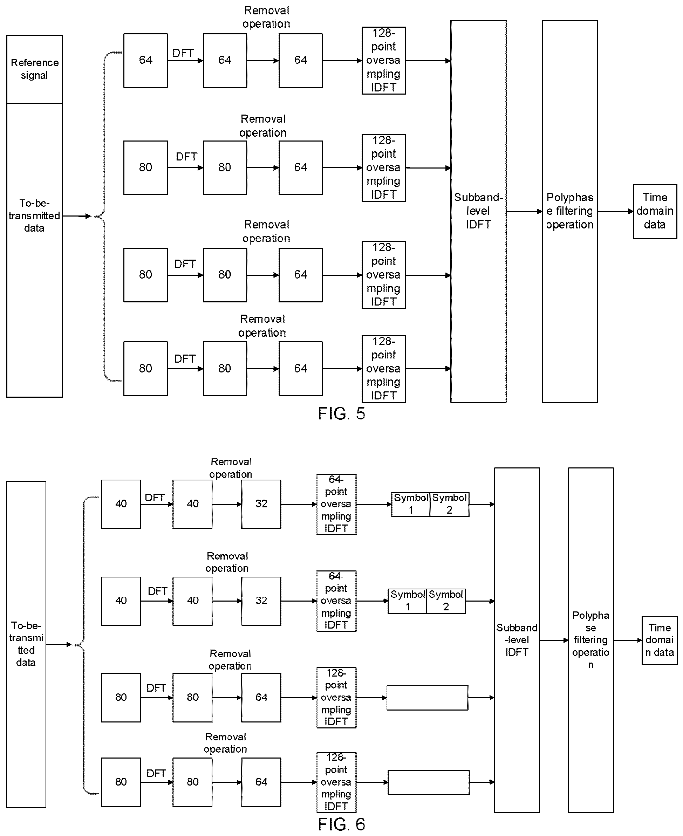

Exemplarily, as shown in FIG. 5, the to-be-transmitted data and a reference signal are divided into four groups of first sequences; the first group of first sequences includes 64 pieces of data; each of the second, third, and fourth groups of first sequences includes 80 pieces of data. The data contained in the first group of sequences is reference signal data.

In some embodiments, the N groups of first sequences are all transmitted using a single-carrier mode. Thus, when the N groups of first sequences are transmitted using a single carrier, less power and energy are required, so that power consumption and energy consumption at the transmitting end and the receiving end may be effectively reduced.

In some embodiments, the M groups of first sequences are transmitted using a single-carrier mode; the other N-M groups of first sequences among the N groups of first sequences, excluding the M groups of first sequences, are transmitted using a multi-carrier mode. Thus, when transmitted using a multi-carrier mode, the first sequences may be transmitted on different carriers, so that the risk of a single carrier failure is reduced and thus the reliability and fault tolerance of the system is improved.

Exemplarily, continuing to refer to FIG. 5, the first group of sequences may be transmitted using either a single-carrier mode or a multi-carrier mode. In FIG. 5, a multi-carrier mode is used.

In some embodiments, the numbers of subcarriers of the subbands corresponding to the N groups of first sequences are the same, and the subcarrier spacings are the same.

Exemplarily, continuing to refer to FIG. 3, the to-be-transmitted data is divided into four groups of first sequences; the first group of first sequences includes 80 pieces of data; each of the second, third, and fourth groups of first sequences includes 64 pieces of data. The numbers of subcarriers of the subbands corresponding to respective groups of the first sequences in the four groups of first sequences is 64, and the subcarrier spacings of the subbands corresponding to respective groups of the first sequences in the four groups of first sequences are 15 kHz.

As yet another example, continuing to refer to FIG. 4, the to-be-transmitted data is divided into four groups of first sequences; each group of first sequences includes 80 pieces of data. The numbers of subcarriers of the subbands corresponding to respective groups of the first sequences in the four groups of first sequences are 64, and the subcarrier spacings are 15 kHz.

In some embodiments, the numbers of subcarriers of the subbands corresponding to the N groups of first sequences is not all the same; where the subcarrier spacings of two subbands with the same number of subcarriers are the same; the subcarrier spacings of two subbands with a different number of subcarriers are different.

In some embodiments, for two subbands with different numbers of subcarriers, a ratio of the numbers of subcarriers between the two subbands is 2 to the power of i (i.e., 2ⁱ), a ratio of the subcarrier spacings between the two subbands is 2 to the power of -i (i.e., 2⁻ⁱ), and i is an integer. In this way, it may be ensured that subbands with different subcarrier spacings may transmit data together within the same frequency band.

Exemplarily, as shown in FIG. 6, the to-be-transmitted data is divided into four groups of first sequences; the first and second groups of first sequences both include 40 pieces of data; the third and fourth groups of first sequences both include 80 pieces of data. The numbers of subcarriers of the subbands corresponding to the first and second groups of first sequences are 32, and the subcarrier spacings of the subbands corresponding to the first and second groups of first sequences are 30 kHz. The numbers of subcarriers of the subbands corresponding to the third and fourth groups of first sequences are 64, and the subcarrier spacings of the subbands corresponding to the third and fourth groups of first sequences are 15 kHz. Therefore, the number of subcarriers of the subband corresponding to the first group of first sequences or the second group of first sequences is twice that of the subband corresponding to the third group of first sequences or the fourth group of first sequences; the subcarrier spacing of the subband corresponding to the first group of first sequences or the second group of first sequences is half of that of the subband corresponding to the third group of first sequences or the fourth group of first sequences.

In S102: N groups of third sequences are obtained based on the N groups of first sequences.

The M groups of third sequences among the N groups of third sequences are obtained by performing Fourier transform and removal operations on the M groups of first sequences respectively; the numbers of pieces of data in the N groups of third sequences equal the numbers of subcarriers of the corresponding subbands. Fourier transform may decompose a signal in time domain into a linear combination of sine and cosine waves with different frequencies and amplitudes. Exemplarily, the Fourier transform is a discrete Fourier transform (Discrete Fourier Transform, DFT).

In some embodiments, for a first sequence whose number of pieces of data is greater than a number of subcarriers of the corresponding subband, Fourier transform is performed on the first sequence to obtain a second sequence; a removal operation is performed on the second sequence to obtain a third sequence.

In some embodiments, performing the removal operation on the second sequence to obtain the third sequence may be implemented as: determining a difference Q between the number of pieces of data contained in the first sequence and the number of subcarriers of the subband corresponding to the first sequence; when Q is an even number, removing Q/2 pieces of data from two ends of the second sequence to obtain the third sequence; when Q is an odd number, removing (Q+1)/2 pieces of data from the head of the second sequence and removing (Q-1)/2 pieces of data from the tail of the second sequence, to obtain the third sequence; or, removing (Q-1)/2 pieces of data from the head of the second sequence and removing (Q+1)/2 pieces of data from the tail of the second sequence, to obtain the third sequence.

Exemplarily, continuing to refer to FIG. 3, the number of pieces of data contained in the first group of first sequences is 80, the number of subcarriers of the subband corresponding to the first group of first sequences is 64, so the difference between the number of data contained in the first group of first sequences and the number of subcarriers of the subband corresponding to the first group of first sequences is an even number 16. Assume that performing DFT on the first group of first sequences to obtain a second sequence [x1, x2, x3, ..., x79, x80]; then remove 8 pieces of data from two ends to obtain a third sequence [x9, x10, ..., x71, x72].

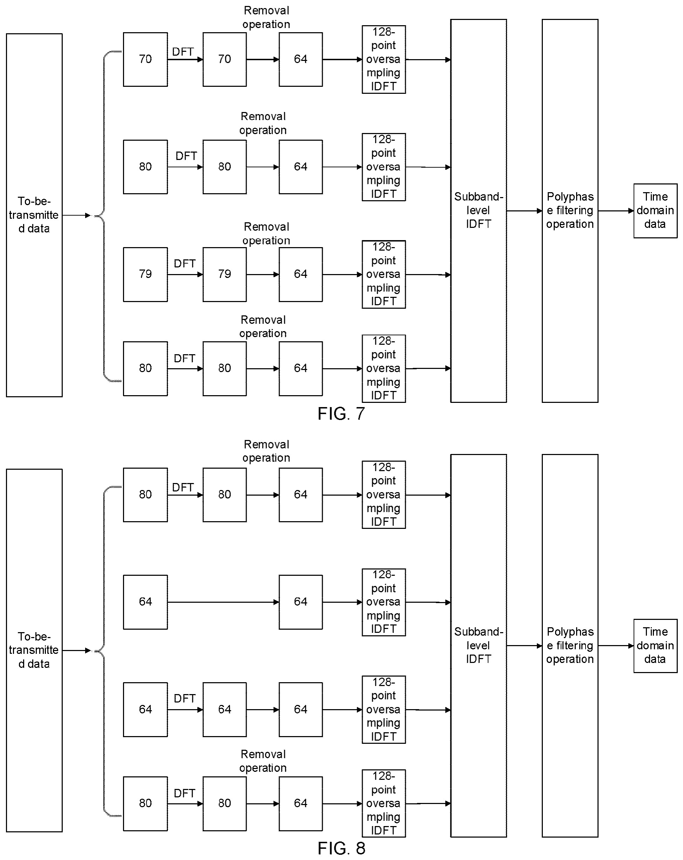

As yet another example, as shown in FIG. 7, the to-be-transmitted data is divided into four groups of first sequences; respective groups of first sequences include 70, 80, 79, and 80 pieces of data respectively. The subcarrier spacings of the subbands corresponding to respective groups of first sequences are 15 kHz. DFT is performed on respective groups of first sequences to obtain four groups of second sequences; removal operations are performed on two ends of respective groups of the second sequences in the four groups of second sequences to obtain four groups of third sequences, where each group of third sequences contains 64 pieces of data.

The difference between the number of pieces of data in the third sequence corresponding to the third group of first sequences and the number of subcarriers of the subband corresponding to the third group of first sequences is an odd number 15. Therefore, 8 pieces of data are removed from the head of the second sequence corresponding to the third group of first sequences and 7 pieces of data are removed from the tail of the second sequence corresponding to the third group of first sequences, to obtain the third sequence corresponding to the third group of first sequences; or, 7 pieces of data are removed from the head of the second sequence corresponding to the third group of first sequences and 8 pieces of data is removed from the tail of the second sequence corresponding to the third group of first sequences, to obtain the third sequence corresponding to the third group of first sequences.

For example, assume the second sequence obtained after performing DFT on the first group of first sequences is: [x1, x2, x3, ..., x69, x70], then the third sequence obtained after the removal operation is: [x4, x5, ..., x66, x67]; assume the second sequence obtained after performing DFT on the second group of first sequences is: [x1, x2, x3, ..., x79, x80], then the third sequence obtained after the removal operation is: [x9, x10, ..., x71, x72]; assume the second sequence obtained after performing DFT on the third group of first sequences is: [x1, x2, x3, ..., x78, x79], then the third sequence obtained after the removal operation is: [x8, x9, x10, ..., x69, x70, x71]; assume the second sequence obtained after performing DFT on the fourth group of first sequences is: [x1, x2, x3, ..., x79, x80], then the third sequence obtained after the removal operation is: [x9, x10, ..., x71, x72].

In some embodiments, for a first sequence whose number of pieces of data equals to the number of subcarriers of the corresponding subband, the first sequence is taken as the third sequence, or discrete Fourier transform is performed on the first sequence to obtain the third sequence. Thus, for a subband not using super-Nyquist transmission, single-carrier or multi-carrier data may be selected.

Exemplarily, continuing to refer to FIG. 3, respective groups of first sequences of the second, third, and fourth groups of first sequences includes 64 pieces of data, and the numbers of subcarriers of the corresponding subbands are 64. DFT is performed on respective groups of first sequences of the second, third, and fourth groups of first sequences to obtain the third sequences corresponding to respective groups of first sequences in the second, third, and fourth groups.

Exemplarily, as shown in FIG. 8, respective groups of first sequences of the first and fourth groups of first sequences includes 80 pieces of data; respective groups of first sequences of the second and third groups of first sequences includes 64 pieces of data; the numbers of subcarriers of the subbands corresponding to respective groups of first sequences in the four groups of first sequences are 64, and the subcarrier spacings of the subbands corresponding to respective groups of first sequences in the four groups of first sequences are 15 kHz. DFT and followed removal operations are performed on respective groups of first sequences of the first and fourth groups of first sequences to obtain corresponding third sequences thereof. The second group of first sequences is taken as the third sequence corresponding to the second group of first sequences. DFT is performed on the third group of first sequences to obtain the third sequence corresponding to the third group of first sequences.

In S103: a group of data sequences is obtained based on the N groups of third sequences.

In some embodiments, a first inverse Fourier transform is performed on the N groups of third sequences respectively, to obtain N groups of fourth sequences; a second inverse Fourier transform is performed on the N groups of fourth sequences to obtain the group of data sequences. Inverse Fourier Transform (Inverse Fourier Transform, IFT) is the inverse operation of Fourier transform, which converts a signal in frequency domain back to time domain. Exemplarily, the inverse Fourier transform is an Inverse Discrete Fourier Transform (Inverse Discrete Fourier Transform, IDFT).

In some embodiments, a sampling point number of the first inverse Fourier transform performed on each group of third sequences in the N groups of third sequences is the same as the number of subcarriers of the subband corresponding to the third sequence. Since information of the third sequence originates from the first sequence, the subband corresponding to the third sequence is the same as the subband corresponding to the first sequence corresponding to the third sequence.

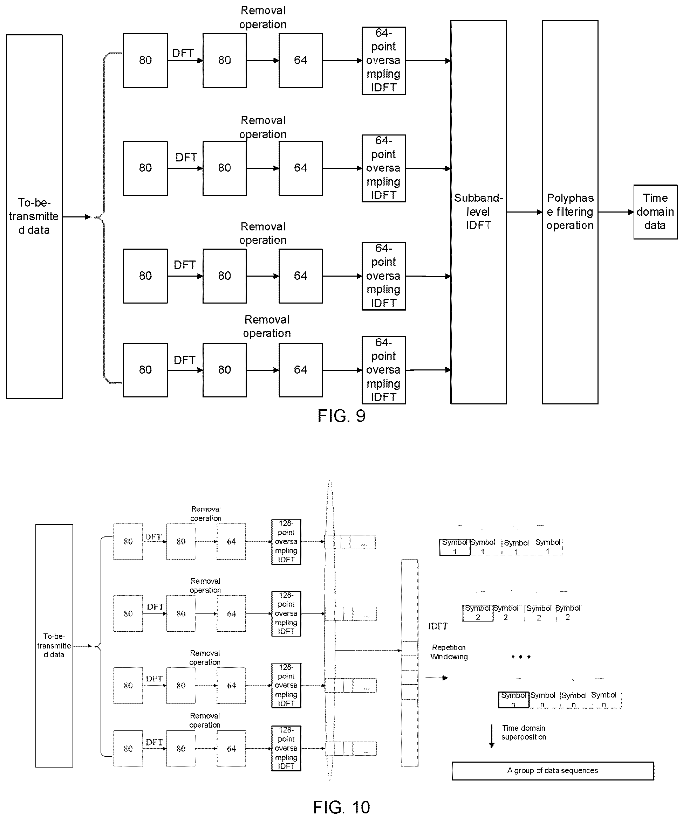

Exemplarily, as shown in FIG. 9, the to-be-transmitted data is divided into four groups of first sequences; each group of first sequences includes 80 pieces of data. The numbers of subcarriers of the subbands corresponding to respective groups of the first sequences in the four groups of first sequences are 64, and the subcarrier spacings of the subbands corresponding to respective groups of the first sequences in the four groups of first sequences are 15 kHz. DFT is performed on the four groups of first sequences in the FIG. 9, followed by the removal operation to obtain four groups of third sequences; respective groups of third sequences contain 64 pieces of data; a first inverse Fourier transform is performed on the four groups of third sequences to obtain four groups of fourth sequences respectively; a second inverse Fourier transform is performed on the four groups of fourth sequences to obtain the group of data sequences. The first inverse Fourier transform performed on each group of third sequences in the four groups of third sequences is IDFT, and the sampling point number of the IDFT is 64, which is the same as the number of subcarriers of corresponding subband thereof.

In some embodiments, the first inverse Fourier transform performed on each group of third sequences in the N groups of third sequences is a P-times oversampled inverse Fourier transform; a sampling point number of the first inverse Fourier transform is a product of a number of subcarriers of the subband corresponding to the third sequence and P, P being an integer greater than or equal to 2.

Exemplarily, continuing to refer to FIG. 4, a number of subcarriers of the subband corresponding to each group of third sequences is 64, and the subcarrier spacing of the subband corresponding to each group of third sequences is 15 kHz. The first inverse Fourier transform performed on each group of third sequences in the four groups of third sequences is a 2-times oversampled IDFT, and a sampling point number of the first inverse Fourier transform is 128.

In some embodiments, sampling point numbers of the first inverse Fourier transform performed on respective groups of third sequences in the N groups of third sequences are the same.

Exemplarily, continuing to refer to FIG. 3, the to-be-transmitted data is divided into four groups of first sequences; numbers of subcarriers of subbands corresponding to respective groups of the first sequences in the four groups of first sequences are 64, and subcarrier spacings of subbands corresponding to respective groups of the first sequences in the four groups of first sequences are 15 kHz. A first inverse Fourier transform with the same sampling point number is performed on each group of third sequences in the four groups of third sequences corresponding to the four groups of first sequences in the FIG. 3, to obtain four groups of fourth sequences; a second inverse Fourier transform is performed on each of the four groups of fourth sequences to obtain a group of data sequences. The first inverse Fourier transform is a 2-times oversampled IDFT, and a sampling point number of the first inverse Fourier transform is 128.

In some embodiments, sampling point numbers of the first inverse Fourier transform performed on respective groups of third sequences in the N groups of third sequences are not all the same; sampling point numbers of the first inverse Fourier transform performed on the third sequences respectively corresponding to two subbands with the same subcarrier spacing are the same; sampling point numbers of the first inverse Fourier transform performed on third sequences respectively corresponding to two subbands with different subcarrier spacings are different.

Exemplarily, continuing to refer to FIG. 6, numbers of subcarriers of the subbands corresponding to the first and second groups of first sequences in FIG. 6 is 32, and subcarrier spacings of the subbands corresponding to the first and second groups of first sequences are 30 kHz. Numbers of subcarriers of the subbands corresponding to the third and fourth groups of first sequences are 64, and subcarrier spacings of the subbands corresponding to the third and fourth groups of first sequences are 15 kHz. DFT is performed on each of the four groups of first sequences to obtain four groups of second sequences; a removal operation is performed on each of the four groups of second sequences to obtain four groups of third sequences. Numbers of pieces of data in the third sequences corresponding to the first and second groups of first sequences are 32; numbers of pieces of data in the third sequences corresponding to the third and fourth groups of first sequences are 64. For example, assume the second sequence obtained after performing DFT on the first group of data is: [x1, x2, x3, ..., x39, x40], then the second sequence obtained after the removal operation is: [x5, x10, ..., x35, x36]. A first inverse Fourier transform is performed on each of the four groups of third sequences in FIG. 6, to obtain four groups of fourth sequences; a second inverse Fourier transform is performed on each of the four groups of fourth sequences to obtain a group of data sequences. The first inverse Fourier transform corresponding to the first and second groups of sequences is a 2-times oversampled inverse Fourier transform, and a sampling point number of the first inverse Fourier transform is 64. The first inverse Fourier transform corresponding to the third and fourth groups of sequences is a 2-times oversampled IDFT, and a sampling point number of the first inverse Fourier transform is 128.

In some embodiments, zero-frequency positions of the first inverse Fourier transform performed on different groups of third sequences are different.

In some embodiments, a sampling point number of the first inverse Fourier transform is less than a sum of numbers of subcarriers of the subbands respectively corresponding to the N first sequences. A zero-frequency position of the first inverse Fourier transform performed on a third sequence is located within a frequency domain range of the corresponding subband.

In some embodiments, a zero-frequency position of the first inverse Fourier transform performed on a third sequence is one of the subcarriers of the corresponding subband.

In some embodiments, each of the N groups of fourth sequences is multiplied by a corresponding coefficient group to obtain N groups of fifth sequences; a second inverse Fourier transform is performed on the N groups of fifth sequences to obtain a group of data sequences.

In some embodiments, the coefficient group is: [exp(2πi/M×(n-1)×0),exp(2πi/M×(n-1)×1),...,exp(2πi/M×(n-1)×(M×k(n)-1))], or [exp(2πi/M×(n-1)×0+πi)exp(2πi/M×(n-1)×1+πi),...,exp(2πi/M×(n-1)×(M×k(n)-1)+πi)], where k(n) is a number of pieces of data contained in the n-th group of first sequences among the N groups of first sequences, n is a positive integer less than or equal to N, and K(n) is a positive integer.

In some embodiments, the second inverse Fourier transform process is: for subbands with different subcarrier spacings, a length of the fourth sequence corresponding to the subband with the smallest subcarrier spacing is taken as a reference length; for fourth sequences corresponding to the subband(s) with non-minimum subcarrier spacing(s), the fourth sequences are serially concatenated to form a sequence with the same length as the reference length, then combine the sequence with the same length as the reference length with the fourth sequence corresponding to the subband with the smallest subcarrier spacing to form N groups of seventh sequences; multiple inverse Fourier transforms are performed on the N groups of seventh sequences to obtain a group of data sequences.

Exemplarily, continuing to refer to FIG. 6, the four groups of third sequences correspond to subbands with different subcarrier spacings; subcarrier spacings of the subbands corresponding to the first and second groups of first sequences are 30 kHz; subcarrier spacings of the subbands corresponding to the third and fourth groups of first sequences are 15 kHz. The fourth sequence corresponding to the third or fourth group of first sequences is taken as the reference length; the fourth sequences corresponding to the first and second groups of sequences are serially concatenated with symbol data at the next moment and symbol data at the current moment to form a 128-point sequence; then the 128-point sequence is combined with the fourth sequences corresponding to the third and fourth groups of first sequences to form four groups of seventh sequences; multiple inverse Fourier transforms are performed on the four groups of seventh sequences to obtain a group of data sequences.

In some other embodiments, the second inverse Fourier transform process is: arrange the N groups of fourth sequences are arranged in rows to obtain a data matrix; K groups of sixth sequences are extracted from the data matrix in columns, where a sixth sequence includes N data, K being a positive integer; an oversampled inverse Fourier transform is performed on each of the K groups of sixth sequences to obtain K groups of time-domain sequences; the K groups of time-domain sequences are serially concatenated to obtain a group of data sequences.

Exemplarily, as shown in FIG. 10, the to-be-transmitted data is divided into four groups of first sequences; each group of first sequences includes 80 pieces of data. Subcarrier spacings of the subbands corresponding to respective groups of first sequences are 15 kHz. DFT is performed on each group of first sequences to obtain four groups of second sequences; then a removal operation is performed on two ends of each group of the second sequences in the four groups of second sequences to obtain four groups of third sequences; each group of third sequences contains 64 pieces of data. For example, assume the second sequence obtained after performing DFT on the first group of first sequences is: [x1, x2, x3, ..., x79, x80], then the third sequence obtained after the removal operation is: [x9, x10, ..., x71, x72]. A first inverse Fourier transform is performed on the four groups of third sequences respectively to obtain four groups of fourth sequences. The first inverse Fourier transform is a 128-point 2-times oversampled IDFT.

Then a second inverse Fourier transform is performed on the four groups of fourth sequences; the second inverse Fourier transform process is: the four groups of fourth sequences are arranged in rows to obtain a data matrix with 4 rows; K groups of sixth sequences are extracted from the data matrix in columns, where a sixth sequence includes 4 data, K being a positive integer; an oversampled 16-point inverse Fourier transform is performed on the K groups of sixth sequences respectively, to obtain K sub-symbols; then the K sub-symbols are repeatedly expanded by 4 times to obtain K groups of time-domain sequences; finally, the K groups of time-domain sequences are serially concatenated to obtain a group of data sequences, where the group of data sequences contains 128 sub-symbols. The concatenation spacing is 8 points, i.e., half a sub-symbol length.

In some embodiments, a second inverse Fourier transform is performed on the N groups of fourth sequences and K groups of eighth sequences to obtain a group of data sequences, the K groups of eighth sequences being sequences generated based on other data than the to-be-transmitted data, where K is a positive integer.

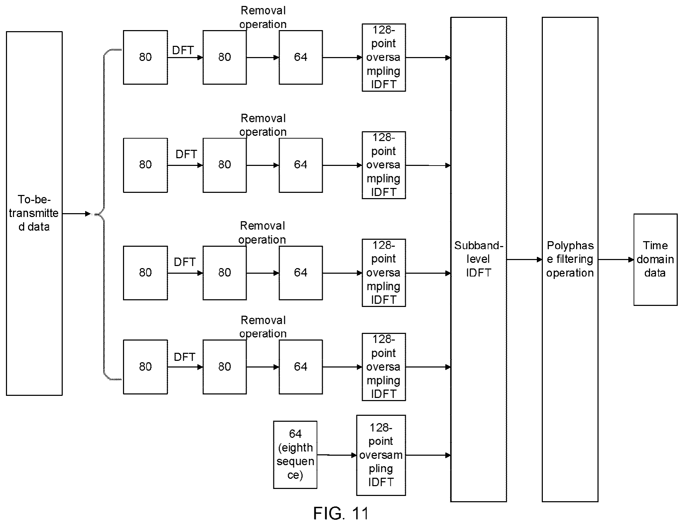

Exemplarily, as shown in FIG. 11, the to-be-transmitted data is divided into four groups of first sequences, each group of first sequences containing 80 pieces of data. Numbers of subcarriers of the subbands corresponding to respective groups of the first sequences in the four groups of first sequences is 64, and subcarrier spacings of the subbands corresponding to respective group of the first sequences in the four groups of first sequences is 15 kHz. DFT is performed on the four groups of first sequences in the figure followed by a removal operation to obtain four groups of third sequences, respective groups of third sequences containing 64 pieces of data; a first inverse Fourier transform is performed on the four groups of third sequences and a group of eighth sequences respectively to obtain five groups of fourth sequences; a second inverse Fourier transform is performed on the five groups of fourth sequences together to form a group of data sequences. A number of pieces of data contained in the eighth sequence is 64 and the eighth sequence does not belong to the data sequence generated from the to-be-transmitted data.

S104: the group of data sequences is transmitted on a time-frequency resource corresponding to the to-be-transmitted data.

In some embodiments, the group of time-domain data sequences after performing a windowing operation is transmitted on the time-frequency resource corresponding to the to-be-transmitted data.

In some embodiments, the group of time-domain data sequences after performing filtering is transmitted on the time-frequency resource corresponding to the to-be-transmitted data.

In some embodiments, the filtering is single-phase filtering or polyphase filtering. For example, referring to FIGS. 3 to 9 and FIG. 11, the group of data sequences after performing polyphase filtering is transmitted on the time-frequency resource corresponding to the to-be-transmitted data.

In some embodiments, the filter function used for polyphase filtering includes: a root raised cosine function, a raised cosine function, a rectangular function, or an IOTA function.

Based on this, the M groups of first sequences among the N groups of first sequences, whose number of pieces of data is greater than a number of subcarriers of the corresponding subband, are transmitted using a super-Nyquist transmission. The M groups of first sequences undergo Fourier transform followed by a removal operation, so that numbers of pieces of data in the processed M groups of first sequences equals to the numbers of subcarriers of the corresponding subband, thereby reducing out-of-band leakage of the subband, facilitating flexible configuration of the number of pieces of data within the subband, and improving spectral efficiency. On the other hand, dividing the to-be-transmitted data into N groups of first sequences for processing to obtain a group of data sequences for transmission, can reduce guard intervals and mitigate interference between systems or subbands. Thus, while guard intervals are reduced, it is beneficial to reducing out-of-band leakage of subbands and improving spectral efficiency. Additionally, multi-bandwidth channels and multiple waveforms may be supported flexibly.

The foregoing primarily introduces the solutions of the embodiments of the present disclosure from a method perspective. The following also shows a data transmission apparatus for performing the data transmission method in any of the foregoing embodiments and possible implementations thereof. It may be understood that the data transmission apparatus includes corresponding hardware structures and/or software modules for performing various functions to implement the data transmission method. Those skilled in the art should readily realize that, in combination with the algorithm steps of the examples described in the embodiments of the present disclosure, the present disclosure can be implemented in hardware or a combination of hardware and computer software. Whether a specific function is executed by hardware or computer software driving hardware depends on the specific application and design constraints of the technical solution. Professional technicians may use different methods for each specific application to implement the described functions, but such implementation should not be considered beyond the scope of the present disclosure.

The embodiments of the present disclosure may divide the data transmission apparatus into functional modules according to the foregoing method embodiments; for example, each function may correspond to each functional module, or two or more functions may be integrated into a functional module. The foregoing integrated modules may be implemented in hardware or software form. It should be noted that the division of modules in the embodiments of the present disclosure is illustrative and is merely a logical function division; in actual implementation, there may be other division manners. The following description takes dividing each functional module corresponding to each function as an example.

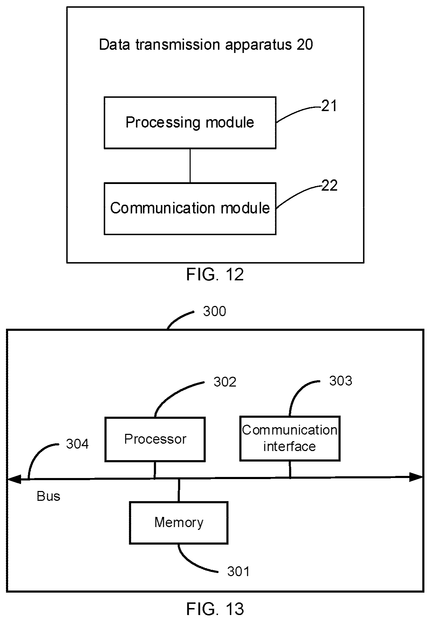

FIG. 12 is a data transmission apparatus provided by the embodiments of the present disclosure, applicable to a first communication node. The data transmission apparatus 20 includes: a processing module 21 and a communication module 22.

The processing module 21 is configured to divide to-be-transmitted data into N groups of first sequences; the N groups of first sequences correspond to different subbands, there are M groups of first sequences among the N groups of first sequences, a number of pieces of data in the M groups of first sequences is greater than a number of subcarriers of corresponding subbands, where N is a positive integer, M is a positive integer less than or equal to N.

The processing module 21 is further configured to obtain N groups of third sequences based on the N groups of first sequences; where M groups of third sequences among the N groups of third sequences are obtained by performing Fourier transforms and removal operations on the M groups of first sequences respectively; a number of pieces of data in the N groups of third sequences equals to a number of subcarriers of corresponding subbands.

The processing module 21 is further configured to obtain a group of data sequences based on the N groups of third sequences.

The communication module 22 is configured to transmit the group of data sequences on a time-frequency resource corresponding to the to-be-transmitted data.

In some embodiments, the processing module 21 is further configured to, for a first sequence whose number of pieces of data is greater than a number of subcarriers of a corresponding subband, perform a Fourier transform on the first sequence to obtain a second sequence; and perform a removal operation on the second sequence to obtain a third sequence.

In some embodiments, the processing module 21 is configured to: determine a difference Q between a number of pieces of data contained in the first sequence and a number of subcarriers of the subband corresponding to the first sequence, where Q is a positive integer; in a case where Q is an even number, remove Q/2 data from two ends of the second sequence to obtain the third sequence; in a case where Q is an odd number, remove (Q+1)/2 data from a head of the second sequence and remove (Q-1)/2 data from a tail of the second sequence to obtain the third sequence; or, remove (Q-1)/2 data from the head of the second sequence and remove (Q+1)/2 data from the tail of the second sequence to obtain the third sequence.

In some embodiments, the processing module 21 is further configured to, for a first sequence whose number of pieces of data equals to a number of subcarriers of the corresponding subband, take the first sequence as the third sequence, or perform a Fourier transform on the first sequence to obtain the third sequence.

In some embodiments, numbers of pieces of data in the N groups of first sequences are all greater than a number of subcarriers of the corresponding subband.

In some embodiments, numbers of pieces of data in the M groups of first sequences are all the same; or, the numbers of pieces of data in the M groups of first sequences is not entirely the same.

In some embodiments, the N groups of first sequences are all transmitted using a single-carrier mode.

In some embodiments, the M groups of first sequences are transmitted using a single-carrier mode; the other N-M groups of first sequences among the N groups of first sequences, excluding the M groups of first sequences, are transmitted using a multi-carrier mode.

In some embodiments, numbers of subcarriers of the subbands corresponding to the N groups of first sequences are the same, and subcarrier spacings of the subbands corresponding to the N groups of first sequences are the same.

In some embodiments, numbers of subcarriers of the subbands corresponding to the N groups of first sequences are not all the same; where subcarrier spacings of two subbands with the same number of subcarriers are the same; subcarrier spacings of two subbands with a different number of subcarriers are different.

In some embodiments, for two subbands with different numbers of subcarriers, a ratio between numbers of subcarriers of the two subbands is 2 to the power of i, and a ratio between subcarrier spacings of the two subbands is 2 to the power of -i, i being an integer.

In some embodiments, the processing module 21 is configured to: perform first inverse Fourier transforms on the N groups of third sequences respectively to obtain N groups of fourth sequences; perform a second inverse Fourier transform on the N groups of fourth sequences to obtain the group of data sequences, where a sampling point number of the second inverse Fourier transform is greater than N.

In some embodiments, sampling point numbers of the first inverse Fourier transform performed on respective groups of third sequences in the N groups of third sequences are the same as numbers of subcarriers of the subbands corresponding to the third sequences.

In some embodiments, the first inverse Fourier transform performed on each group of third sequences in the N groups of third sequences is a P-times oversampled inverse Fourier transform; and a sampling point number of the first inverse Fourier transform is a product of the number of subcarriers of the subband corresponding to the third sequence and P, P being an integer greater than or equal to 2.

In some embodiments, sampling point numbers of the first inverse Fourier transform performed on respective groups of third sequences in the N groups of third sequences are the same.

In some embodiments, sampling point numbers of the first inverse Fourier transform performed on respective groups of third sequences in the N groups of third sequences are not all the same; sampling point numbers of the first inverse Fourier transform performed on the third sequences respectively corresponding to two subbands with the same subcarrier spacing are the same; sampling point numbers of the first inverse Fourier transform performed on third sequences respectively corresponding to two subbands with different subcarrier spacings are different.

In some embodiments, a sampling point number of the first inverse Fourier transform is less than a sum of numbers of subcarriers of the subbands respectively corresponding to the N first sequences.

In some embodiments, zero-frequency positions of the first inverse Fourier transform performed on different groups of third sequences are different.

In some embodiments, a zero-frequency position of the first inverse Fourier transform performed on a third sequence is within a frequency domain range of the corresponding subband.

In some embodiments, a zero-frequency position of the first inverse Fourier transform performed on a third sequence is one of subcarriers of the corresponding subband.

In some embodiments, the processing module 21 is configured to: multiply the N groups of fourth sequences by corresponding coefficient groups respectively to obtain N groups of fifth sequences; and perform the second inverse Fourier transform on the N groups of fifth sequences to obtain the group of data sequences.

In some embodiments, the processing module 21 is configured to: arrange the N groups of fourth sequences in rows to obtain a data matrix; extract K groups of sixth sequences in columns from the data matrix, where a sixth sequence including N data, and K is a positive integer; perform oversampled inverse Fourier transforms on the K groups of sixth sequences respectively to obtain K groups of time-domain sequences; and serially concatenate the K groups of time-domain sequences to obtain the group of data sequences.

In some embodiments, the processing module 21 is configured to: perform the second inverse Fourier transform on the N groups of fourth sequences and K groups of eighth sequences to obtain the group of data sequences, the K groups of eighth sequences being sequences generated based on other data than the to-be-transmitted data, where K is a positive integer.

In some embodiments, the to-be-transmitted data includes constellation-point-modulated data and R reference signal data, where R is a positive integer.

In some embodiments, the to-be-transmitted data is all or a part of the to-be-transmitted data in a channel bandwidth.

In some embodiments, the N subbands include all or part of frequency-domain resource blocks in a channel bandwidth, each subband in the N subbands corresponding to a/one first sequence.

In a case where the functions of the foregoing integrated modules are implemented in a hardware form, the embodiments of the present disclosure further provide a communication apparatus. The communication apparatus is used for performing the data transmission method provided by the embodiments of the present disclosure. As shown in FIG. 13, the communication apparatus 300 includes: a memory 301, a communication interface 303, a processor 302, and a bus 304.

The memory 301 may be a read-only memory (Read-Only Memory, ROM) or other types of static storage devices capable of storing static information and instructions, a random access memory (Random Access Memory, RAM) or other types of dynamic storage devices capable of storing information and instructions, an electrically erasable programmable read-only memory (Electrically Erasable Programmable Read-Only Memory, EEPROM), a magnetic disk storage medium or other magnetic storage devices, or any other medium capable of carrying or storing desired program code in the form of instructions or data structures and accessible by a computer, but is not limited thereto.

The processor 302 may implement or execute various exemplary logical blocks, modules, and circuits described in combination with the embodiments of the present disclosure. The processor 302 may be a central processor, a general-purpose processor, a digital signal processor, an application-specific integrated circuit, a field-programmable gate array or other programmable logic devices, transistor logic devices, hardware components, or any combination thereof. The processor 302 may implement or execute various exemplary logical blocks, modules, and circuits described in combination with the embodiments of the present disclosure. The processor 302 may also be a combination for implementing computing functions, for example, a combination including one or more microprocessors, a combination of a DSP and a microprocessor, etc.

The communication interface 303 is used for connecting to other devices through a communication network. The communication network may be an Ethernet, a radio access network, wireless local area networks (wireless local area networks, WLAN), etc.

In some embodiments, the memory 301 may exist independently of the processor 302. The memory 301 may be connected to the processor 302 via the bus 304 for storing instructions or program code. When the processor 302 calls and executes the instructions or a program code stored in the memory 301, the data transmission method provided by the embodiments of the present disclosure may be implemented.

In another possible implementation, the memory 301 may also be integrated with the processor 302.

The bus 304 may be an extended industry standard architecture (extended industry standard architecture, EISA) bus, etc. The bus 304 may be divided into an address bus, a data bus, a control bus, etc. For ease of representation, the bus 304 is represented only by one thick solid line in FIG. 13, but does not mean that there is only one bus or one type of bus.

Some embodiments of the present disclosure provide a computer-readable storage medium (e.g., a non-transitory computer-readable storage medium) having computer program instructions stored therein. When the computer program instructions run on a computer, the computer is caused to execute the data transmission method according to any one of the foregoing embodiments.

In an exemplary implementation, the computer may be the foregoing data transmission apparatus, and the present disclosure does not limit the specific form of the computer.

In some examples, the computer-readable storage medium may include, but is not limited to, a magnetic storage device (e.g., a hard disk, a floppy disk, or a magnetic tape), an optical disk (e.g., a compact disk (CD) or a digital versatile disk (DVD)), a smart card and a flash memory device (e.g., an erasable programmable read-only memory (EPROM), a card, a stick, or a key driver). The various computer-readable storage media described in the present disclosure may represent one or more devices and/or other machine-readable storage media for storing information. The term "machine-readable storage medium" may include, but is not limited to, a wireless channel and various other media capable of storing, containing, and/or carrying instructions and/or data.

The embodiments of the present disclosure provide a computer program product containing instructions. When the computer program product runs on a computer, the computer is caused to execute the data transmission method according to any one of the foregoing embodiments.

The foregoing descriptions are merely specific implementations of the present disclosure, but the protection scope of the present disclosure is not limited thereto. Any change or substitution within the technical scope disclosed in the present disclosure shall be covered within the protection scope of the present disclosure. Therefore, the protection scope of the present disclosure shall be determined based on the protection scope of the claims.

## Claims

1. A data transmission method, **characterized in that** the method comprises:
dividing to-be-transmitted data into N groups of first sequences; the N groups of first sequences correspond to different subbands, there are M groups of first sequences among the N groups of first sequences, a number of pieces of data in the M groups of first sequences is greater than a number of subcarriers in corresponding subbands, N is a positive integer, and M is a positive integer less than or equal to N;
obtaining N groups of third sequences based on the N groups of first sequences; wherein M groups of third sequences among the N groups of third sequences are obtained by performing Fourier transform and removal operations on the M groups of first sequences respectively; a number of pieces of data in the N groups of third sequences is equal to a number of subcarriers in corresponding subbands;
obtaining a group of data sequence based on the N groups of third sequences; and
transmitting the group of data sequence on a time-frequency resource corresponding to the to-be-transmitted data.

2. The method according to claim 1, wherein for a first sequence whose number of pieces of data is greater than a number of subcarriers in a corresponding subband, Fourier transform is performed on the first sequence to obtain a second sequence; and a removal operation is performed on the second sequence to obtain the third sequence.

3. The method according to claim 2, wherein performing the removal operation on the second sequence to obtain the third sequence comprises:
determining a difference Q between a number of pieces of data contained in the first sequence and a number of subcarriers in the subband corresponding to the first sequence, Q being a positive integer;
in response that Q is an even number, removing Q/2 data from two ends of the second sequence respectively, to obtain the third sequence;
in response that Q is an odd number, removing (Q+1)/2 data from a head of the second sequence and removing (Q-1)/2 data from a tail of the second sequence, to obtain the third sequence; or, removing (Q-1)/2 data from the head of the second sequence and removing (Q+1)/2 data from the tail of the second sequence, to obtain the third sequence.

4. The method according to claim 2, wherein for a first sequence whose number of pieces of data equals to a number of subcarriers in a corresponding subband, the first sequence is taken as the third sequence, or Fourier transform is performed on the first sequence to obtain the third sequence.

5. The method according to claim 1, wherein numbers of pieces of data in the N groups of first sequences are all greater than numbers of subcarriers in corresponding subbands.

6. The method according to claim 1, wherein numbers of pieces of data of the M groups of first sequences are all the same; or the numbers of pieces of data of the M groups of first sequences are not all the same.

7. The method according to claim 1, wherein the N groups of first sequences are all transmitted using a single-carrier mode.

8. The method according to claim 1, wherein the M groups of first sequences are transmitted using a single-carrier mode, and other N-M groups of first sequences among the N groups of first sequences except the M groups of first sequences are transmitted using a multi-carrier mode.

9. The method according to claim 1, wherein numbers of subcarriers in subbands corresponding to the N groups of first sequences are the same, and subcarrier spacings in the subbands corresponding to the N groups of first sequences are the same.

10. The method according to claim 1, wherein numbers of subcarriers in subbands corresponding to the N groups of first sequences are not all the same; wherein subcarrier spacings in two subbands having an identical number of subcarriers are the same; subcarrier spacings in two subbands having different numbers of subcarriers are not the same.

11. The method according to claim 10, wherein for the two subbands having different numbers of subcarriers, a ratio between numbers of subcarriers in the two subbands is 2 to the power of i, a ratio between the subcarrier spacings in the two subbands is 2 to the power of -i, and i is an integer.

12. The method according to claim 1, wherein obtaining the group of data sequence based on the N groups of third sequences comprises:
performing first inverse Fourier transform on the N groups of third sequences respectively, to obtain N groups of fourth sequences;
performing second inverse Fourier transform on the N groups of fourth sequences to obtain the group of data sequence, wherein a sampling point number of the second inverse Fourier transform is greater than N.

13. The method according to claim 12, wherein a sampling point number of the first inverse Fourier transform performed on each group of third sequences among the N groups of third sequences is the same as a number of subcarriers in the subband corresponding to the third sequence.

14. The method according to claim 12, wherein the first inverse Fourier transform performed on each group of third sequences among the N groups of third sequences is a P-times oversampled inverse Fourier transform, a sampling point number of the first inverse Fourier transform is a product of a number of subcarriers in the subband corresponding to the third sequence and P, and P is an integer greater than or equal to 2.

15. The method according to claim 12, wherein sampling point numbers of the first inverse Fourier transform performed on respective groups of third sequences among the N groups of third sequences are the same.

16. The method according to claim 12, wherein sampling point numbers of the first inverse Fourier transform performed on respective groups of third sequences among the N groups of third sequences are not all the same; sampling point numbers of the first inverse Fourier transform performed on third sequences respectively corresponding to two subbands having an identical subcarrier spacing are the same; sampling point numbers of the first inverse Fourier transform performed on third sequences respectively corresponding to two subbands having different subcarrier spacings are the same.

17. The method according to claim 12, wherein a sampling point number of the first inverse Fourier transform is less than a sum of numbers of subcarriers in subbands respectively corresponding to the N groups of first sequences.

18. The method according to claim 12, wherein zero-frequency positions of the first inverse Fourier transform performed on different groups of third sequences are different.

19. The method according to claim 12, wherein a zero-frequency position of the first inverse Fourier transform performed on the third sequence is located within a frequency domain range of a corresponding subband.

20. The method according to claim 19, wherein the zero-frequency position of the first inverse Fourier transform performed on the third sequence is one of subcarriers in the corresponding subband.

21. The method according to claim 12, wherein performing second inverse Fourier transform on the N groups of fourth sequences to obtain the group of data sequence comprises:
multiplying respective groups of fourth sequences of the N groups of fourth sequences by corresponding coefficient groups, to obtain N groups of fifth sequences; and
performing second inverse Fourier transform on the N groups of fifth sequences to obtain the group of data sequence.

22. The method according to claim 12, wherein performing second inverse Fourier transform on the N groups of fourth sequences to obtain the group of data sequence comprises:
arranging the N groups of fourth sequences in rows to obtain a data matrix;
extracting K groups of sixth sequences in columns from the data matrix, wherein the sixth sequence comprises N data, and K is a positive integer;
performing an oversampled inverse Fourier transform on the K groups of sixth sequences respectively to obtain K groups of time-domain sequences; and
serially concatenating the K groups of time-domain sequences to obtain the group of data sequence.

23. The method according to claim 12, wherein performing second inverse Fourier transform on the N groups of fourth sequences to obtain the group of data sequence comprises:
performing second inverse Fourier transform on the N groups of fourth sequences and K groups of eighth sequences to obtain the group of data sequence, wherein the K groups of eighth sequences are sequences generated based on other data besides the to-be-transmitted data, and K is a positive integer.

24. The method according to claim 1, wherein the to-be-transmitted data comprises constellation-point-modulated data and R reference signal data, and R is a positive integer.

25. The method according to claim 1, wherein the to-be-transmitted data is all or a part of to-be-transmitted data in a channel bandwidth.

26. The method according to claim 1, wherein N subbands comprise all or a part of frequency-domain resource blocks in a channel bandwidth, and each subband of the N subbands corresponds to one of the first sequences.

27. A communication apparatus, **characterized by** comprising: a memory and a processor; the memory is coupled to the processor; the memory is configured to store instructions executable by the processor; the processor, upon executing the instructions, implements the method according to any one of claims 1 to 26.

28. A computer-readable storage medium, **characterized in that** computer instructions are stored on the computer-readable storage medium, and in response to that the computer instructions are executed on a communication apparatus, so that the communication apparatus implements the method according to any one of claims 1 to 26.
